# EUROPÄISCHE PATENTSCHRIFT

(11) **EP 2 832 456 B1**
(45) Veröffentlichungstag und Bekanntmachung des Hinweises auf die Patenterteilung: **22.08.2018**
(21) Anmeldenummer: 14179333.1
(22) Anmeldetag: 31.07.2014
(51) Int. Cl.: B06B 3/00, B23K 20/10, B29C 65/08, B29C 65/00

(54) **Sonotrodenwerkzeug mit integrierter Kühleinrichtung**
Sonotrode tool with integrated cooling device
Sonotrode doté d'un dispositif de refroidissement intégré

(30) Priorität: 01.08.2013 DE 102013215106
(43) Veröffentlichungstag der Anmeldung: 04.02.2015
(73) Patentinhaber: PP-Tech Gmbh, 76316 Malsch (DE)
(72) Erfinder: Ochs, Marco, 76275 Ettlingen (DE)
(74) Vertreter: Weickmann & Weickmann PartmbB

(56) Entgegenhaltungen:
- EP-A1- 1 868 182
- DE-A1-102008 029 769
- DE-U1-202008 007 271
- US-B1- 6 578 753
- US-B1- 6 652 992

## Beschreibung

Die vorliegende Erfindung betrifft eine Sonotrode oder ein Sonotrodenwerkzeug, umfassend
- einen Sonotrodenkörper, welcher wenigstens einen Kontaktbereich zum Beaufschlagen wenigstens eines Werkstücks oder Materials oder eines auf dieses/diese wirkenden weiteren Werkzeugs mit an wenigstens einem Einleitbereich des Sonotrodenkörpers von einer Schwingeinheit eingeleiteten hochfrequenten mechanischen Schwingungen, und
- eine Wärmeabführeinrichtung, mittels welcher Wärme vom Kontaktbereich abführbar ist.
Es sind Sonotrodenwerkzeuge zum Einleiten von hochfrequenten mechanischen Schwingungen in Werkstücke und Materialien, etwa beim Verschweißen von Kunststoffbauteilen und auch Folienmaterialien, bekannt. Hierbei wird mit Hilfe einer schwingenden Sonotrode an eine Stelle des Bauteils bzw. Materials Leistung in Form von Ultraschall eingebracht, der an einer anderen Stelle, beispielsweise einer Fügestelle zu einem damit verbindenden zweiten Bauteil, Grenzflächen- und Molekularreibung zwischen den Bauteilen bzw. Materialien hervorruft und somit in Form von Wärme freigesetzt wird.
Beim Verschweißen eines Produktes mit automatisierten hohen Taktzeiten (z.B. im Bereich der Verpackungstechnik) entsteht im Mittel ein hoher Wärmestrom, der an der Spitze der Sonotrode (allgemein am "Kontaktbereich") in diese eingebracht wird. Wird diese Wärme nicht adäquat abgeführt, so erhöht sich die Temperatur des Kontaktbereiches. Im ungünstigsten Fall wird der Kunststoff des Bauteils aufgrund der hohen Temperatur des Sonotrodenwerkzeugs erweicht.

Die US 6,652,992 B1 zeigt eine für eine Anwendung in wässriger Umgebung angepasste Sonotrode, bei welcher ein Kern aus korrosionsbeständigem, silberbasierten Metall den Kontaktbereich des Sonotrodenkörpers bildet.

Bei herkömmlichen Wärmeabführeinrichtungen im Sonotrodenwerkzeug entsprechend GB 952,042 oder DE 10 2008 029 769 A1 wird unter ständigem Einsatz eines zugeführten Kühlmittels, das den Sonotrodenkörper durchströmt, nicht nur die am Kontaktbereich des Sonotrodenkörpers von der Sonotrode aufgenommenen Wärme abgeführt, sondern auch der gesamte Sonotrodenkörper abgekühlt. Hierfür sind technische Mittel wie Zufuhr- und Abflussleitungen und eine Pumpe erforderlich.

Ein einen externen Kühlkreislauf aufweisender Sonotrodenkörper ist aus DE 20 2008 007 271 U1 bekannt. Dabei wird ein Kühlmittel über eine Kühlmittelleitung im Inneren des Sonotrodenkörpers einem den Kontaktbereich benachbarten Bereich zugeführt, in einem Hohlraum des Sonotrodenkörpers verdampft, aus dem Sonotrodenkörper geleitet und in einem externen Kreislauf verflüssigt und verdichtet bevor es dem Sonotrodenkörper erneut zugeführt wird.

Die US 6,578,753 B1 zeigt eine Kühlung der piezoelektrischen Elemente und Elektrodenplatten des Ultraschallgenerators mittels eines von außen zugeführten Luftstroms.

Aufgrund solcher technischen Mittel und ebenso einer zur Kühlung des Kühlmittels notwendigen externen Kühlvorrichtung, deren Ausgestaltungen von den jeweiligen Sonotrodenformen abhängig sind, ist es offensichtlich, dass solche Wärmeabführeinrichtungen nicht nur aufwändig zu installieren bzw. zu betreiben sind, und damit zwangsläufig hohe Anschaffungs- und Betriebskosten nach sich ziehen, sondern auch im Betrieb störanfällig sein können.

Die EP 1 868 182 A1 zeigt eine Möglichkeit zur Kühlung des Ultraschallgenerators mittels eines Kühlfluides, bei welcher der Ultraschallgenerator selbst durch eine zusätzliche mechanische Einheit in Bewegung versetzt wird.
Daher besteht eine Aufgabe der Erfindung darin, ein Sonotrodenwerkzeug mit einer Wärmeabführeinrichtung derart bereitzustellen, dass die Temperaturbelastung am Kontaktbereich der Sonotrode auf einfache Weise kostengünstig und zuverlässig verringert wird.
Zur Lösung dieser Aufgabe wird für das eingangs angesprochene Sonotrodenwerkzeug vorgeschlagen, dass die Wärmeabführeinrichtung eine vollständig im Inneren des Sonotrodenkörpers ausgebildete Wärmetransporteinrichtung umfasst, die dafür ausgeführt ist, Wärme vom Kontaktbereich abzuführen und wenigstens einem anderen Bereich des Sonotrodenkörpers zuzuführen.
Erfindungsgemäß ist die Wärmetransporteinrichtung vollständig im Innern des Sonotrodenkörpers vorgesehen, sodass ohne externe technische Mittel die Temperaturbelastung am Kontaktbereich der Sonotrode und somit an der entsprechenden Stelle des Bauteils verringert wird. Das unerwünschte Erweichen eines zu verschweißenden Bauteils, Materials oder dergleichen wird also verhindert, ohne dass ein erheblicher apparativer Aufwand erforderlich ist.
Die Wärmetransporteinrichtung kann gesondert hergestellt und als vorgefertigtes Teil in einen gesondert hergestellten Sonotrodenkörper eingesetzt werden. Beispielsweise kann der Sonotrodenkörper zuerst als homogener Körper gefertigt werden und es kann dann aus dem Inneren des Sonotrodenkörpers ein Bereich geräumt und mit der Wärmetransporteinrichtung versehen werden. Alternativ kann der Sonotrodenkörper um die Wärmetransporteinrichtung herum geformt werden, je nach Material des Sonotrodenkörpers und Art und Ausgestaltung der Wärmetransporteinrichtung.

Die erfindungsgemäße Wärmetransporteinrichtung sorgt für eine gleichmäßigere Temperaturverteilung über die Länge bzw. allgemein verschiedene Bereiche der Sonotrode und damit über deren Oberfläche, wodurch die Wärmeabfuhr an die Umgebung erhöht wird. Der Sonotrodenkörper dient damit selbst als Teil der Wärmeabführeinrichtung, so dass die Kühlwirkung kostengünstig und effizient erreicht wird.

Gemäß einem ersten Aspekt der Erfindung (vgl. Anspruch 1) umfasst die Wärmetransporteinrichtung in wenigstens einem im Sonotrodenkörper ausgebildeten Hohlraum ein Kühlfluid, welches zumindest teilweise in flüssiger Phase vorliegt und zur Abfuhr von Wärme von dem Kontaktbereich benachbart zu diesem verdampfbar und an wenigstens einer von dem Kontaktbereich entfernten Stelle an einer Kondensationsoberfläche zur flüssigen Phase kondensierbar ist. Vorteilhaft kann man vorsehen, dass unter Verwendung von latenter Wärme bei der Verdampfung und Kondensation die Wärme schnell und wirkungsvoll vom Kontaktbereich bis zur Kondensationsoberfläche transportiert werden kann. Dabei kann man für eine Rückführung des kondensierten Kühlmittels in Richtung zum Kontaktbereich sorgen. Die Wärmetransporteinrichtung funktioniert also nach dem Prinzip eines Wärmerohrs oder Thermosiphons.

Der Hohlraum der Wärmeabführeinrichtung kann bis zu einem Füllstand mit flüssiger Phase des Kühlmittels gefüllt sein. Der restliche Raum kann mit der Dampfphase des gleichen Kühlmittels gefüllt sein. Die Flüssig- und Dampfphase des Kühlmittels können sich vorteilhaft im Sättigungszustand befinden. Wird nun der Sonotrodenkörper am Kontaktbereich im Betrieb erwärmt, so verdampft die flüssige Phase des Kühlmittels (bzw. verdampft mit einer höheren Verdampfungsrate) und kondensiert an der Kondensationsoberfläche (bzw. kondensiert mit einer größeren Kondensationsrate), wodurch ein wirkungsvoller Wärmetransport weg vom Kontaktbereich resultiert. Die so realisierte Wärmetransporteinrichtung weist einen sehr geringen Wärmewiderstand auf. Im Inneren des Hohlraums, insbesondere im Bereich zwischen dem Kontaktbereich und der Kondensationsfläche, stellt sich näherungsweise ein isothermer Zustand ein. Der Füllstand der flüssigen Phase bleibt im Wesentlichen erhalten.

Das Kühlmittel ist gemäß den erwarteten Temperaturen bzw. der erwarteten Wärmebelastung auszuwählen. Eine Bedingung für diese Auswahl ist, dass das Kühlmittel im Betrieb sowohl in der flüssigen als auch in der Dampfphase vorliegen muss und auf Basis des im Betrieb sich einstellenden Temperaturgradienten über die Erstreckung des Sonotrodenkörpers an der Kondensationsfläche kondensierbar ist. Beispielsweise kann man Wasser als Kühlmittel wählen, das nicht nur kostengünstig ist, sondern auch einen umweltfreundlichen Betrieb der Wärmeabführeinrichtung ermöglicht. Sollte ein Sonotrodenkörper zu Bruch gehen und dieses Kühlmittel auslaufen, wird also kein Schaden angerichtet.
Vorzugsweise ist die flüssige Phase durch Schwerkraftwirkung in Richtung zum Kontaktbereich förderbar. Dies ermöglicht einen besonders einfachen Aufbau der Wärmetransporteinrichtung, da diese lediglich einen teilweise mit einem flüssigen Kühlmittel gefüllten, gasdichten Hohlraum benötigt.
Es wird allgemein vorgeschlagen, dass die Rückführung der kondensierten flüssigen Phase nach dem Prinzip eines Thermosiphons erfolgt. Alternativ oder zusätzlich kann die flüssige Phase durch Kapillarwirkung wenigstens einer Kapillarstruktur des Sonotrodenkörpers oder/und eines im Hohlraum aufgenommenen Materials in Richtung des Kontaktbereichs förderbar sein. Die Rückführung der kondensierten Phase kann also nach dem Prinzip eines Wärmerohrs erfolgen, sodass die Wärmetransporteinrichtung in beliebigen Orientierungen des Sonotrodenkörpers funktioniert.

Die Kapillarwirkung kann durch Längsrillen (etwa sogenannte "Grooves", wie bei Wärmerohren bekannt) in der den Hohlraum begrenzenden Innenfläche des Sonotrodenkörpers oder einer Begrenzungswandung eines gegenüber den Sonotrodenkörpers gesonderten, den Hohlraum aufweisenden Elements oder/und durch wenigstens ein beispielsweise aus Kupfer gefertigtes feinmaschiges Geflecht (etwa sogenannte "Wicks", wie bei Wärmerohren bekannt) erzielt werden, welches im Hohlraum angeordnet ist und sich beispielsweise um einen freien Innenraum des Hohlraums erstreckt.

Bevorzugt ist vorgesehen, dass zur Bildung des Hohlraums eine Aussparung im Sonotrodenkörpers durch einen Verschluss verschlossen wird. Der Verschluss kann zum Abdichten der Aussparung als Dichtmittel ausgeführt sein oder ein gesondertes Dichtmittel umfassen, sodass beim Verschließen der Hohlraum komplett gasdicht versiegelt wird. Der Verschluss kann beispielsweise ein mit dem Sonotrodenkörper oder einem gegenüber diesem gesonderten Element verschraubbares Schraubelement umfassen. Der Verschluss kann alternativ auch ein durch Presspassung fixierbares Element umfassen. Auch eine stoffschlüssige Fixierung des Verschlusses, also speziell ein Verschweißen des Verschlusses mit dem Sonotrodenkörper bzw. dem den Hohlraum aufweisenden gesonderten Element, soll nicht ausgeschlossen werden.
Der Verschluss kann vorteilhaft mit einem Ventil zum Evakuieren des Hohlraums oder Entfernen von Gasen im Hohlraum ausgeführt sein. Dies ermöglicht weiterhin, den Hohlraum auf einfache Weise zu evakuieren, sodass der Wärmetransport von dem Kontaktbereich zur Kondensationsoberfläche vermittels der gasförmigen Phase des Kühlmittels nicht durch andere Gase behindert wird.
Gemäß einem zweiten Aspekt der Erfindung umfasst die Wärmetransporteinrichtung ein in den Sonotrodenkörper eingebettetes Material, welches eine höhere Wärmeleitfähigkeit als das das eingebettete Material umgebende Material des Sonotrodenkörpers aufweist.

Gemäß diesem zweiten Aspekt der Erfindung (vgl. Anspruch 6) liegt das eingebettete Material in Form wenigstens eines festen Kerns im Sonotrodenkörper vor. Ein solches Sonotrodenwerkzeug ist besonders kostengünstig herstellbar. Trotzdem wird eine gute Wärmeabfuhr vom Kontaktbereich erreicht. Aufgrund der im Betrieb regelmäßig sehr hohen mechanischen Belastungen beim Verschweißen mit hoher Frequenz und gegebenenfalls hoher Amplitude ist das umgebende Material des Sonotrodenkörpers Titan, eine Titanlegierung oder Stahl. Das eingebettete Material ist Aluminium oder Kupfer. Diese Materialien zeichnen sich durch eine besonders hohe Wärmeleitfähigkeit aus.
Eine besonders zweckmäßige Ausgestaltung der Sonotrode gemäß einem der vorstehenden Aspekte zeichnet sich dadurch aus, dass der Sonotrodenkörper an einem Ende den Einleitbereich und an einem entgegengesetzten Ende den Kontaktbereich aufweist. Der Sonotrodenkörper kann verschiedenartigste Formen aufweisen, wie im Fachgebiet an sich bekannt. Beispielsweise kann sich der Sonotrodenkörper zumindest bereichsweise von einem den Einleitbereich aufweisenden Basisabschnitts des Sonotrodenkörpers hin zu dem gewünschtenfalls an einer Spitze des Sonotrodenkörpers vorgesehenen Kontaktbereich verjüngen.

Es soll aber nicht ausgeschlossen sein, dass der Sonotrodenkörper in einer anderen Form ausgebildet ist. Vorstellbare Ausgestaltungen umfassen einen Sonotrodenkörper in Form einer rotierbaren Walze etwa entsprechend EP 1 900 499 A2 mit einem Kontaktbereich an der Seitenwand der Walze, oder einen langgestreckten Siegelkörper zur Erzeugung langer Siegelnähte. Es wird beispielsweise - ohne Beschränkung der Allgemeinheit - auf WO 2011/117119 A1 und EP 2 058 109 A1 verwiesen.

Anzumerken ist noch, dass die Erfindungs- und Weiterbildungsvorschläge gemäß sich nicht ausschließlich nur auf Anwendungen des Sonotrodenwerkzeugs beim Ultraschallschweißen oder Ultraschallsiegeln beziehen. Ein erfindungsgemäßes Sonotrodenwerkzeug kann auch in anderen ultraschallbasierten Anwendungen zum Einsatz kommen, beispielsweise beim Ultraschallschwingläppen und anderen ultraschallbasierten Behandlungsverfahren, bei denen es zu einer möglicherweise unerwünschten Erwärmung des Sonotrodenwerkzeugs an wenigstens einem Kontaktbereich kommt.

Die Erfindung wird im Folgenden anhand von in den Figuren dargestellten bzw. veranschaulichten Ausführungsbeispielen näher erläutert.
- Fig. 1: zeigt rechts eine Seitenansicht eines Sonotrodenwerkzeugs gemäß eines ersten Ausführungsbespiels der Erfindung (Fig. 1a) und links eine Querschnittansicht gemäß einer Schnittlinie A-A (Fig. 1b).
- Fig. 2: zeigt Auswirkungen der Erfindung auf die Temperaturverteilung in einem Sonotrodenkörper.
- Fig. 3: zeigt rechts eine Seitenansicht eines Sonotrodenwerkzeugs gemäß eines zweiten Ausführungsbeispiels der Erfindung (Fig. 3a) und links eine Querschnittansicht gemäß einer Schnittlinie A'-A' (Fig. 3b).
- Fig. 4: zeigt links eine Seitenansicht eines Sonotrodenwerkzeugs gemäß einem dritten Ausführungsbeispiel der vorliegenden Erfindung (Fig. 4a) und rechts eine Querschnittsansicht gemäß einer Schnittlinie A"-A" (Fig. 4b).
- Fig. 5+6: zeigen jeweils vier nicht beschränkende Beispiele von Sonotrodenkörpern eines jeweils erfindungsgemäßen Sonotrodenwerkzeugs, die mit einer erfindungsgemäßen Wärmeabführeinrichtung abzukühlen ausgestattet sein können.

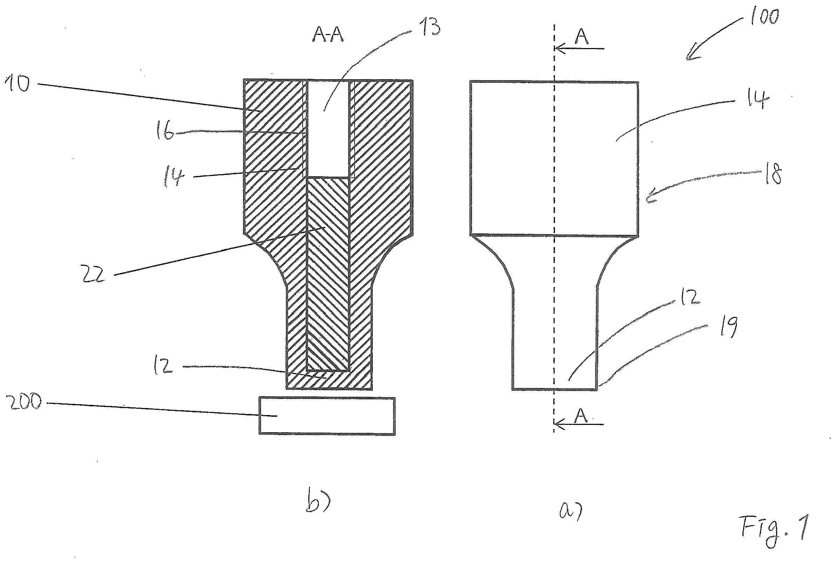

In Figur 1a ist ein erfindungsgemäßes Sonotrodenwerkzeug allgemein mit 100 bezeichnet. Bei dem dargestellten Ausführungsbeispiel ist ein Sonotrodenkörper 10 des Sonotrodenwerkzeugs mit einem Einleitbereich 14 an einem Ende und einem Kontaktbereich 12 an dem entgegengesetzten Ende ausgebildet und erstreckt sich im Raumbereich zwischen dem Einleitbereich 14 und dem Kontaktbereich 12. Ferner verjüngt sich der Sonotrodenkörper 10 von einem dem Einleitbereich 14 aufweisenden Basisabschnitts 18 hin zu dem an einer Spitze 19 des Sonotrodenkörpers vorgesehenen Kontaktbereich 12. Der Basisabschnitt 18 ist mit einer zylindrischen Aussparung 13 ausgeführt, die an einem Innenumfang mit einem Innengewinde 16 ausgeführt ist, welches zum Verschrauben mit einem komplementären Halteelement eines Ultraschallgenerators dient, mit dem Ultraschall in den Sonotrodenkörper eingeleitet werden kann.

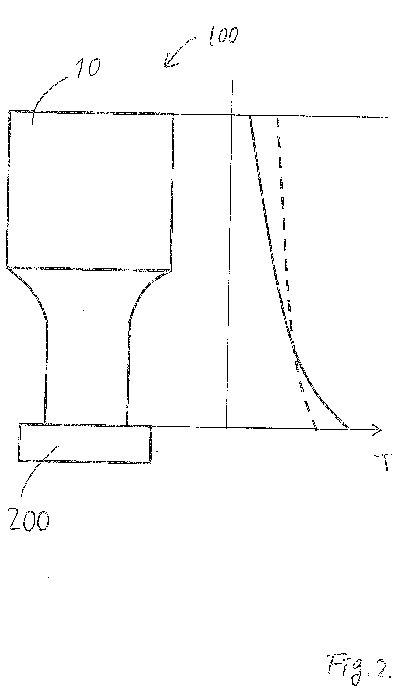

Auf bekannte Art und Weise dient das Sonotrodenwerkzeug 100 zur Beaufschlagung eines zu bearbeitenden Werkstücks 200, insbesondere zum Verschweißen des Werkstücks 200 mit einem anderen, nicht gezeigten Werkstück, indem das Sonotrodenwerkzeug mit seinem Kontaktbereich 12 mit dem Werkstück in Kontakt gebracht wird, sodass der Ultraschall in das Werkstück eingeleitet wird. Der Sonotrodenkörper erfüllt dabei eine Anpassungsfunktion. Durch Grenzflächen- und Molekularreibung zwischen den Werkstücken entsteht dann die zum Verschweißen erforderliche Wärme, die allerdings auch zu einer Erwärmung des Werkstücks 200 in Nachbarschaft zum Kontaktbereich 12 und damit zur Erwärmung des Sonotrodenkörpers am Kontaktbereich führt.
Es kann also thermische Leistung gezielt an einer Stelle zugeführt werden, an der beispielsweise ein Aufschmelzen des Materials, etwa Kunststoffmaterials, der zu verschweißenden Werkstücke gewünscht ist, im Gegensatz zum Verschweißen durch Wärmezufuhr von außen. Die angesprochene Erwärmung des Sonotrodenkörpers über den Kontaktbereich lässt sich aber nicht verhindern und kann zu Problemen führen, etwa dadurch, dass Temperaturen erreicht werden, die zu einem Erweichen des Kunststoffmaterials eines Bauteils und damit zur nicht akzeptablen Schweißergebnissen führen könnten. Dies ist ein Problem vor allem auch deswegen, weil der Sonotrodenkörper in der Regel aus einem Material mit recht geringer Wärmeleitfähigkeit hergestellt ist, beispielsweise Titan oder Stahl, da der Sonotrodenkörper im Betrieb regelmäßig sehr hohen mechanischen Belastungen ausgesetzt wird. Die Wärmeabfuhr durch Wärmeleitung aus dem Kontaktbereich 12 kann also zu schlecht sein, um die Wärme adäquat abzuführen. Figur 2 zeigt schematisch den räumlichen Temperaturverlauf längs eines Sonotrodenkörpers für eine herkömmlich ausgestattete Sonotrode (durchgezogene Linie) und für eine erfindungsgemäße Sonotrode (gestrichelte Linie). Für die herkömmliche Sonotrode fällt ein Temperaturmaximum am Kontaktbereich zum Werkstück 200 auf, von dem die Temperatur dann vergleichsweise steil abfällt, was auf eine ungenügende Wärmeleitung im Sonotrodenkörper zurückzuführen ist. Erfindungsgemäß wird nun durch Verbesserung der Wärmeleitung im Sonotrodenkörper eine bessere Verteilung der Wärme über die Erstreckung des Sonotrodenkörpers erreicht, wie die gestrichelte Linie im Temperaturdiagramm der Figur 2 deutlich macht. Das Temperaturmaximum ist weiterhin am Kontaktbereich, aber gegenüber einer herkömmlichen Sonotrode deutlich reduziert und mit einem wesentlich geringeren Abfall der Temperatur über die Länge der Sonotrode, aufgrund der erfindungsgemäßen besseren Wärmeleitung. Da der Sonotrodenkörper insgesamt erwärmt wird, also nicht nur am Kontaktbereich und in eng dem Kontaktbereich benachbarten Abschnitten des Sonotrodenkörpers, steht auch eine größere Oberfläche zur Abfuhr der Wärme nach außen zur Verfügung, sodass die Wärme nicht nur besser über den Sonotrodenkörper verteilt ist, sondern auch durch Abstrahlung und Wechselwirkung mit der Umgebungsluft mit einer höheren Rate nach außen abgegeben wird.
Zur Erzielung der erfindungsgemäßen besseren Wärmeverteilung und damit erfindungsgemäß besseren Wärmeabfuhr nach außen ohne externe Mittel gibt es diverse in Frage kommende Möglichkeiten. Figur 1 zeigt eine besonders einfache Lösung. Durch Einbettung eines Kerns 22 aus einem Material mit gegenüber dem eigentlichen Sonotrodenmaterial wesentlich höherer Wärmeleitfähigkeit, beispielsweise eines Aluminium-Kerns, ist eine "Wärmetransporteinrichtung" 22 realisiert. Der Kern kann hierzu in direktem Flächenkontakt mit inneren Flächen des Sonotrodenkörpers sein, insbesondere mit einer dem Kontaktbereich eng benachbarten inneren Fläche des Sonotrodenkörpers, sodass die Wärme wirkungsvoll durch den Kern aufgenommen und über die Erstreckung des Kerns abgeführt und damit über die Erstreckung des Sonotrodenkörpers verteilt werden kann. Eine solche Sonotrode lässt sich einfach herstellen. Es wird beispielsweise ein Bereich aus dem Inneren der Sonotrode geräumt und das Material mit der höheren Wärmeleitfähigkeit, im Beispielsfall Aluminium, eingebracht. Ein Vorteil dieser Lösung ist die Einfachheit der Realisierung und die Unabhängigkeit der Wärmeabfuhrfunktion von einer Ausrichtung der Sonotrode bezüglich der Richtung der Erdbeschleunigung.

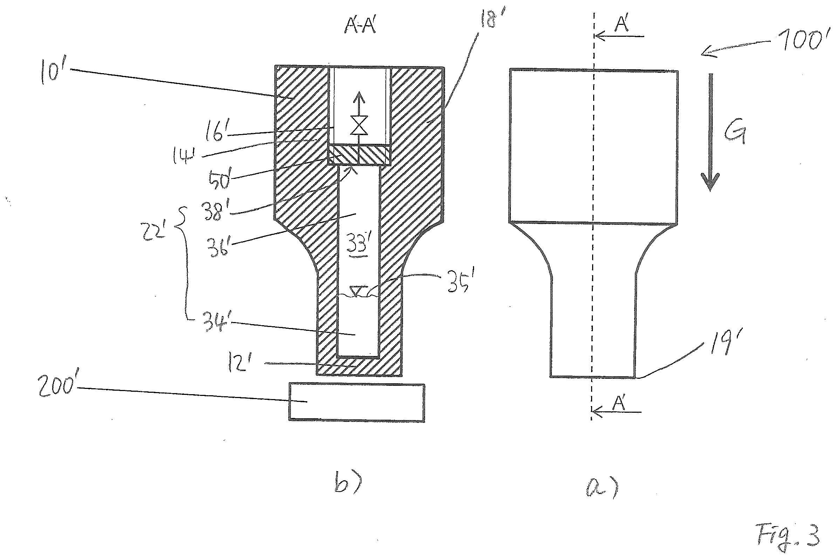

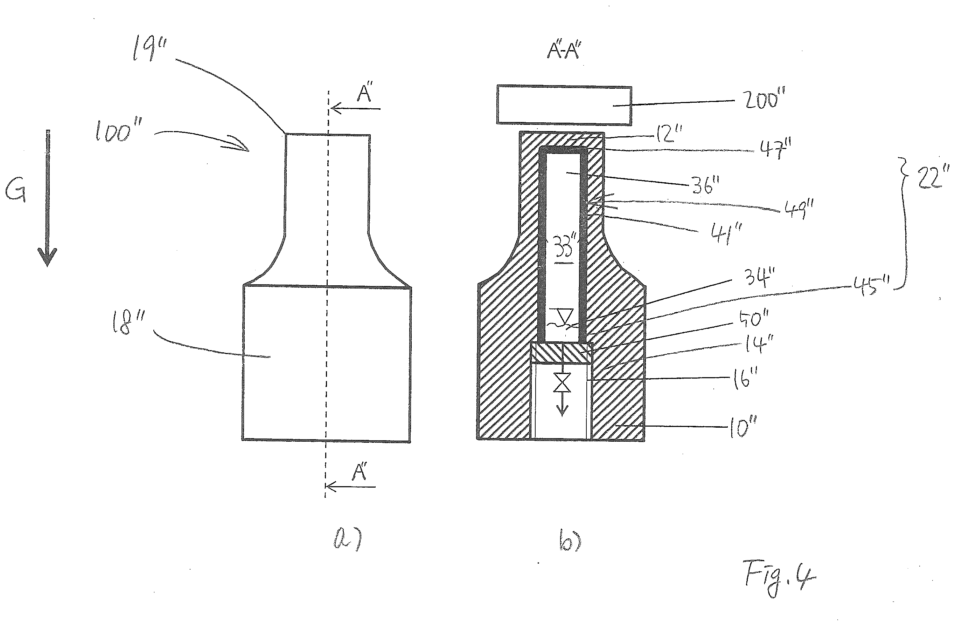

Eine besonders wirkungsvolle Abfuhr der Wärme vom Kontaktbereich lässt sich nach den an sich bekannten Prinzipien einer sogenannten "heat pipe" oder eines "Thermosiphons" erreichen, wofür die Figuren 3 und 4 Beispiele zeigen. Es werden die Ausführungsbeispiele der Figuren 3 und 4 unter Verwendung der gleichen Bezugszeichen beschrieben, jeweils um einen Strich oder zwei Striche ergänzt zur Kennzeichnung des jeweiligen Ausführungsbeispiels. Es werden im Folgenden nur die Unterschiede zu dem vorangehend beschriebenen Ausführungsbeispiel bzw. den vorangehend beschriebenen Ausführungsbeispielen erläutert.

Beim erfindungsgemäßen Sonotrodenwerkzeug 100' nach dem zweiten Ausführungsbeispiel der Figur 3 ist die äußere Gestalt des Sonotrodenkörpers identisch zum Sonotrodenkörper 10 nach dem ersten Ausführungsbeispiel der Figur 1. Der Sonotrodenkörper 10' umfasst also einen Kontaktbereich 12' und einen Einleitbereich 14' und wird mit dem Basisabschitt 18' an einem Ultraschallgenerator angeschlossen.

Nach dem Ausführungsbeispiel ist der Sonotrodenkörper mit einem integrierten Thermosiphon ausgeführt. Dies kann einfach dadurch erreicht werden, dass der Sonotrodenkörper 10' von innen geräumt wird, um einen Hohlraum 33' zu bilden, der durch einen Verschluss 50' gasdicht verschlossen wird. Der Verschluss 50' kann zweckmäßig mit einem schematisch in der Figur angedeutet Ventil ausgeführt sein, über das der Hohlraum evakuiert und mit einem Kühlmittel, beispielsweise Wasser, in flüssiger Phase 34' bis hin zu einem Füllstand 35' gefüllt werden kann. Aufgrund der zu vorigen Evakuierung ist der restliche Raum des Hohlraums 33' mit der Dampfphase 36' desselben Kühlmittels gefüllt, und es stellt sich ein Sättigungszustand (2-Phasengebiet) der Flüssig- und Dampfphase des als Kühlmittel verwendeten Fluids ein.

Eine alternative Möglichkeit ist, dass der Hohlraum zuerst mit dem flüssigen Kühlmittel 34' mindestens bis zum Füllstand 35' gefüllt wird und danach über das Ventil durch Abzug von Dampf alle Fremdgase entfernt werden, um den Sättigungszustand des Kühlfluids herzustellen. Der anfängliche Füllstand sollte hierzu höher sein als der Füllstand, der nach dem Abzug der Fremdgase verbleiben soll. Ist der Hohlraum durch anfängliche Evakuierung und dann Einfüllen des Kühlfluids bzw. durch nachträglichen Abzug von Dampf zur Entfernung der Fremdgase von Fremdgasen befreit, so stellt sich bei jeder Temperatur ein Sättigungszustand ein, sofern die Temperatur nicht unterhalb des Gefrierpunktes sinkt. Empfehlenswert ist eine möglichst gute Entfernung von Fremdgas, also anderem Gas oder anderen Gasen als dem verwendeten Kühlfluid, was beispielsweise auch unter Einsatz von Turbomolekularpumpen erfolgen kann, mit denen ein sehr gutes Vakuum erreichbar ist.

Neben dem Evakuieren des Hohlraums bzw. dem Abzug von Dampf zur Erreichung eines Drucks entsprechend dem Dampfdruck des verwendeten Kühlmittels besteht ein Freiheitsgrad grundsätzlich auch in der Auswahl des Kühlmittels. Für normale Anwendungen bietet sich gerade Wasser als Kühlmittel an, da Wasser bei Raumtemperatur (21°C) bei einem Druck von etwa 0,025 bar siedet.

Wird im Betrieb Wärme am Kontaktbereich 12' des Sonotrodenkörpers 10' eingebracht, so verdampft das flüssige Kühlmittel 34' und kondensiert an vom Kontaktbereich 12' ferneren Abschnitten der Innenoberfläche des Hohlraums sowie der Innenfläche des Verschlusses 50'. Diese Innenflächen bilden eine Kondensationsoberfläche 38'. Dabei wird die Wärme als latente Wärme an die Kondensationsoberfläche 38' übertragen. Hauptkondensationsfläche ist die Innenfläche des Hohlraums, genauer der mit der Dampfphase in Kontakt stehende Bereich der beispielsweise zylindrischen Innenoberfläche des Hohlraums. Das kondensierte Kühlmittel fließt aufgrund der Schwerkraft zum Vorrat an flüssigem Kühlmittel im unteren Bereich des Hohlraums zurück. Die Wärmeabführwirkung wird also nach dem Prinzip eines Thermosiphons erzielt, bei dem eine Zirkulation des Kühlmittels beruhend auf der Schwerkraft aufgrund auftretender Konvektion genutzt wird, ergänzt durch den Wärmetransport aufgrund der Wärme aus dem Kühlmittelvorrat aufnehmenden Verdampfung und der Abgabe der entsprechenden Kondensationswärme an die Kondensationsoberfläche beim Kondensieren. Der beim Ausführungsbeispiel realisierte Thermosiphon stellt also gewissermaßen ein "Wärmerohr" mit Rückführung des kondensierten Kühlmittels durch Schwerkraftwirkung dar. Es wird näherungsweise ein isothermer Zustand im Inneren des Hohlraums 33' erreicht. In Figur 3 ist die Richtung Erdbeschleunigung G mit einem Pfeil angegeben.

Beim dritten Ausführungsbeispiel gemäß Figur 4 ist der Sonotrodenkörper mit einem integrierten Wärmerohr ("heat pipe") ausgeführt. Hierzu kann, ähnlich wie beim Ausführungsbeispiel der Figur 3, der Sonotrodenkörper zur Bildung eines Hohlraums 33" geräumt sein, und der resultierende Hohlraum kann durch einen Verschluss 50" ähnlich wie beim zweiten Ausführungsbeispiel verschlossen sein, welcher ein Ventil zum Evakuieren und Einfüllen des Kühlmittels aufweisen kann. Durch die vorherige Evakuierung bzw. durch das Entfernen von Fremdgasen wird ein Sättigungszustand (2-Phasengebiet) des Kühlmittels eingestellt, sodass der Hohlraum bis zu einem gewissen Füllstand mit der flüssigen Phase 34" gefüllt ist und der restliche Raum mit der Dampfphase 36" des gleichen Kühlmittels gefüllt ist. Der Unterschied gegenüber der Ausführungsform der Figur 3 mit Übertragung von Wärme als latente Wärme durch Nutzung zweier Phasen eines Kühlmittels liegt darin, dass nach dem Ausführungsbeispiel der Figur 4 für eine Rückführung des kondensierten Mediums in Richtung zum Kontaktbereich gesorgt wird, die unabhängig von der Orientierung relativ zur Erdanziehung ist, nämlich auf der Kapillarwirkung einer kapillaren Struktur beruht. Hierzu kann beispielsweise eine den Hohlraum 33" begrenzende Innenfläche 49" des Sonotrodenkörpers mit einer Längsrillen 41" umfassenden Rillenstruktur ausgeführt sein, die das flüssige Kühlmittel aus einem Längsrillenbereich 45", der in den Vorrat an flüssigem Kühlmittel eintaucht, zu dem den Kontaktbereich 12" benachbarten Bereich 47" der Längsrillen transportiert, wo das flüssige Kühlmittel verdammt.
In Figur 4 gibt der Pfeil die Richtung Erdbeschleunigung G an, was zeigt, dass nach diesem Ausführungsbeispiel das flüssige Kühlmittel entgegen der Gewichtskraft transportiert werden kann. Diese aus dem Verdampfen resultierende Gasphase des Kühlmittels verteilt sich im Hohlraum und kondensiert mit besonders hoher Rate an den kälteren Bereichen der Innenoberfläche 49" des Hohlraums und auch an der Oberfläche des flüssigen Kühlmittelvorrats. Auch aufgrund eines resultierenden Druckgefälles innerhalb des Wärmerohrs, zwischen dem Bereich wo das Kühlmittel verdampft (hier resultiert ein lokal erhöhter Druck) und dem Bereich, wo das Kühlmittel wieder kondensiert (hier stellt sich ein lokal erniedrigter Druck ein) ergibt sich ein wirkungsvoller Fluidkreislauf, der kontinuierlich Wärme von dem Kontaktbereich 12" abtransportiert und an andere Bereiche der Sonotrode überführt, sodass insgesamt eine gleichmäßigere Wärmeverteilung entsprechend der gestrichelten Temperaturkurve in Figur 2 erreicht wird.

Anzumerken ist, dass man zusätzliche oder alternativ auch eine andere Art von Kapillarstruktur zur Zurückführung der flüssigen Phase zum Kontaktbereich realisieren kann, beispielsweise ein Geflecht aus feinen Metalldrähten oder Fasern, beispielsweise aus Kupfer, wie im Fachgebiet unter dem Begriff "wick" (also "Docht") bekannt.

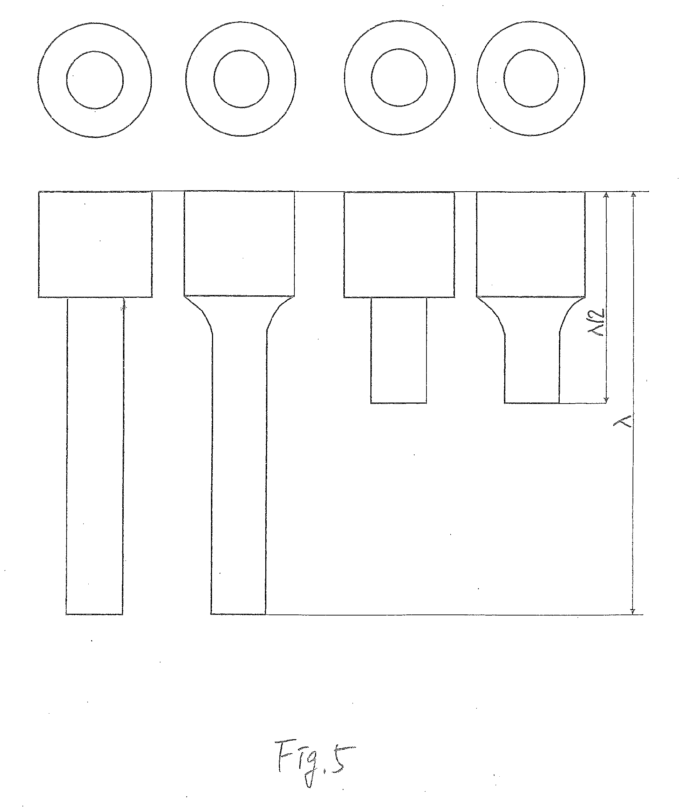

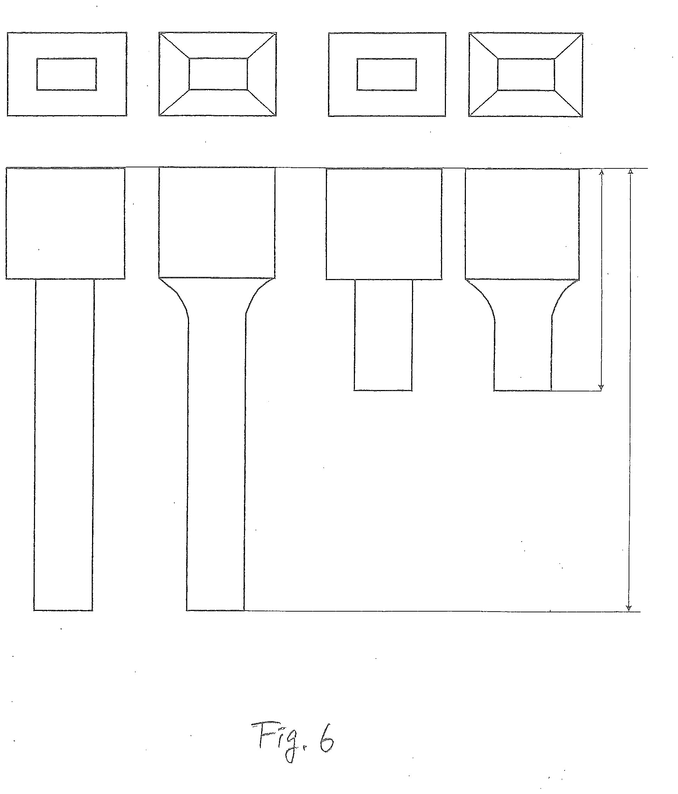

Figuren 5 und 6 zeigen beispielhafte Formen des Sonotrodenkörpers. Anzumerken ist noch, dass unterschiedliche Anwendungen unterschiedliche Form von Sonotrodenkörper erfordern. Ein erfindungsgemäßer Sonotrodenkörper kann also auch eine völlig andere Gestalt aufweisen als in den Figuren nur als Beispiel gezeigt. Beispielsweise sind Sonotrodenkörper mit einem ringförmigen Kontaktbereich zum kontinuierlichen Siegeln von Kunststofffolien bekannt. Auch bei solch einer völlig anders gestalteten Sonotrode kann der Erfindungsvorschlag einer gezielten Wärmeabfuhr vom Kontaktbereich durch eine integrierte "Wärmetransporteinrichtung" ohne Bedarf für externe Mittel zur Erzielung der Wärmeabfuhr vorteilhaft zum Einsatz kommen.

## Patentansprüche

1. Sonotrode (100; 100'; 100"), umfassend
- einen Sonotrodenkörper (10; 10'; 10"), welcher wenigstens einen Kontaktbereich (12; 12'; 12") zum Beaufschlagen wenigstens eines Werkstücks (200; 200'; 200") oder Materials oder eines auf dieses/diese wirkenden weiteren Werkzeugs mit an wenigstens einem Einleitbereich (14; 14'; 14") des Sonotrodenkörpers (10; 10'; 10") von einer Schwingeinheit eingeleiteten hochfrequenten mechanische Schwingungen aufweist, und
- eine Wärmeabführeinrichtung, mittels der Wärme vom Kontaktbereich abführbar ist,
**dadurch gekennzeichnet,**
**dass** die Wärmeabführeinrichtung eine vollständig im Inneren des Sonotrodenkörper ausgebildete, nach dem Prinzip eines Wärmerohrs oder Thermosiphons funktionierende Wärmetransporteinrichtung (22; 22'; 22") umfasst, die dafür ausgeführt ist, Wärme vom Kontaktbereich (12; 12'; 12") abzuführen und wenigstens einem anderen Bereich des Sonotrodenkörpers (10; 10'; 10") zuzuführen, und die in wenigstens einem im Sonotrodenkörper (10'; 10") ausgebildeten Hohlraum (33'; 33") ein Kühlfluid (34', 36'; 34", 36") umfasst, welches zumindest teilweise in der flüssigen Phase (34'; 34") vorliegt und zur Abfuhr von Wärme von dem Kontaktbereich (12'; 12") benachbart zu diesem verdampfbar und an wenigstens einer von dem Kontaktbereich entfernten Stelle an einer Kondensationsoberfläche (38'; 49"), die Abschnitte der Innenoberfläche des Hohlraums (33';33") umfasst, zur flüssigen Phase kondensierbar ist.

2. Sonotrode (100') nach Anspruch 1, **dadurch gekennzeichnet, dass** die flüssige Phase (34') gemäß dem Prinzip eines Thermosiphons durch Schwerkraftwirkung in Richtung zum Kontaktbereich (12') förderbar ist.

3. Sonotrode (100") nach Anspruch 1 oder 2, **dadurch gekennzeichnet, dass** die flüssige Phase (34") gemäß dem Prinzip eines Wärmerohrs durch Kapillarwirkung wenigstens einer Kapillarstruktur (41") des Sonotrodenkörpers (10") oder/und eines im Hohlraum (33") aufgenommenen Materials in Richtung zum Kontaktbereich (12") förderbar ist.

4. Sonotrode (100'; 100") nach einem der Ansprüche 1 bis 3, **dadurch gekennzeichnet, dass** zur Bildung des Hohlraums (33'; 33") eine Aussparung des Sonotrodenkörpers durch einen Verschluss (50'; 50") verschlossen ist.

5. Sonotrode (100'; 100") nach Anspruch 4, **dadurch gekennzeichnet, dass** der Verschluss (50'; 50") mit einem Ventil zum Evakuieren des Hohlraums oder Entfernen von Gasen im Hohlraum ausgeführt ist.

6. Sonotrode (100; 100'; 100"), umfassend
- einen Sonotrodenkörper (10; 10'; 10"), welcher wenigstens einen Kontaktbereich (12; 12'; 12") zum Beaufschlagen wenigstens eines Werkstücks (200; 200'; 200") oder Materials oder eines auf dieses/diese wirkenden weiteren Werkzeugs mit an wenigstens einem Einleitbereich (14; 14'; 14") des Sonotrodenkörpers (10; 10'; 10") von einer Schwingeinheit eingeleiteten hochfrequenten mechanische Schwingungen aufweist, und
- eine Wärmeabführeinrichtung, mittels der Wärme vom Kontaktbereich abführbar ist,
**dadurch gekennzeichnet, dass**
- die Wärmeabführeinrichtung eine vollständig im Inneren des Sonotrodenkörpers ausgebildete Wärmetransporteinrichtung (22; 22'; 22") umfasst, die dafür ausgeführt ist, Wärme vom Kontaktbereich (12; 12'; 12") abzuführen und wenigstens einem anderen Bereich des Sonotrodenkörpers (10; 10'; 10") zuzuführen,
wobei
- die Wärmetransporteinrichtung (22) in den Sonotrodenkörper (10) eingebettetes Material (22) umfasst, welches eine höhere Wärmeleitfähigkeit als das das eingebettete Material umgebende Material des Sonotrodenkörpers (10) aufweist, und
- das umgebende Material des Sonotrodenkörpers (10) Titan, eine Titanlegierung oder Stahl und das eingebettete Material (22) Aluminium oder Kupfer ist.

7. Sonotrode (100; 100'; 100") nach einem der Ansprüche 1 bis 5 oder nach Anspruch 6, **dadurch gekennzeichnet, dass** der Sonotrodenkörper (10, 10'; 10") an einem Ende den Einleitbereich (14; 14'; 14") und an einem entgegengesetzten Ende den Kontaktbereich (12; 12'; 12") aufweist.

8. Sonotrode (100; 100'; 100") nach Anspruch 7, **dadurch gekennzeichnet, dass** der Sonotrodenkörper (10; 10'; 10") sich zumindest bereichsweise von einem den Einleitbereich (14; 14'; 14") aufweisenden Basisabschnitt (18; 18'; 18") des Sonotrodenkörpers (10; 10'; 10") hin zu dem gewünschtenfalls an einer Spitze (19; 19'; 19") des Sonotrodenkörpers (10; 10'; 10") vorgesehenen Kontaktbereich (12; 12'; 12") verjüngt.

9. Verfahren zum Abführen von Wärme, die aus der Beaufschlagung wenigstens eines Werkstücks oder Materials mit hochfrequenten mechanischen Schwingungen unter Verwendung eines Sonotrodenwerkzeugs und einer Schwingeinheit resultiert, wobei das Sonotrodenwerkzeug einen Sonotrodenkörper (10; 10'; 10") umfasst, welcher wenigstens einen Einleitbereich (14; 14'; 14") aufweist, an dem hochfrequente mechanische Schwingungen von der Schwingeinheit in den Sonotrodenkörper eingeleitet werden, und wenigstens einen Kontaktbereich (12; 12'; 12") aufweist, welcher mit dem Werkstück (200; 200'; 200") oder Material in Kontakt ist, sodass das Werkstück oder Material mit den hochfrequenten mechanischen Schwingungen beaufschlagt wird,
wobei das Sonotrodenwerkzeug ferner eine Wärmeabführeinrichtung aufweist, mittels welcher Wärme vom Kontaktbereich abgeführt wird, **dadurch gekennzeichnet, dass** die Wärmeabführeinrichtung eine vollständig im Inneren des Sonotrodenkörpers ausgebildete, nach dem Prinzip eines Wärmerohrs oder Thermosiphons funktionierende Wärmetransporteinrichtung (22; 22'; 22") umfasst, welche Wärme vom Kontaktbereich abführt und wenigstens einem anderen Bereich des Sonotrodenkörpers (10; 10'; 10") zuführt und die in wenigstens einem im Sonotrodenkörper (10'; 10") ausgebildeten Hohlraum (33'; 33") ein Kühlfluid (34', 36'; 34", 36") umfasst, welches zumindest teilweise in der flüssigen Phase (34'; 34") vorliegt und zur Abfuhr von Wärme von dem Kontaktbereich (12'; 12") benachbart zu diesem verdampft wird und an wenigstens einer von dem Kontaktbereich entfernten Stelle an einer Kondensationsoberfläche (38'; 49"), die Abschnitte der Innenoberfläche des Hohlraums (33'; 33") umfasst, zur flüssigen Phase kondensiert wird.

10. Verfahren zum Abführen von Wärme, die aus der Beaufschlagung wenigstens eines Werkstücks oder Materials mit hochfrequenten mechanischen Schwingungen unter Verwendung eines Sonotrodenwerkzeugs und einer Schwingeinheit resultiert, wobei das Sonotrodenwerkzeug einen Sonotrodenkörper (10; 10'; 10") umfasst, welcher wenigstens einen Einleitbereich (14; 14'; 14") aufweist, an dem hochfrequente mechanische Schwingungen von der Schwingeinheit in den Sonotrodenkörper eingeleitet werden, und wenigstens einen Kontaktbereich (12; 12'; 12") aufweist, welcher mit dem Werkstück (200; 200'; 200") oder Material in Kontakt ist, sodass das Werkstück oder Material mit den hochfrequenten mechanischen Schwingungen beaufschlagt wird,
wobei das Sonotrodenwerkzeug ferner eine Wärmeabfuhreinrichtung aufweist, mittels welcher Wärme vom Kontaktbereich abgeführt wird, **dadurch gekennzeichnet, dass** die Wärmeabfuhreinrichtung eine im Sonotrodenkörper ausgebildete, vollständig in dessen Inneren ausgebildete Wärmetransporteinrichtung (22; 22'; 22") umfasst, welche Wärme vom Kontaktbereich abführt und wenigstens einem anderen Bereich des Sonotrodenkörpers (10; 10'; 10") zuführt,
wobei
- die Wärmetransporteinrichtung (22) in den Sonotrodenkörper (10) eingebettetes Material (22) umfasst, welches eine höhere Wärmeleitfähigkeit als das das eingebettete Material umgebende Material des Sonotrodenkörpers (10) aufweist, und
- das umgebende Material des Sonotrodenkörpers (10) Titan, eine Titanlegierung oder Stahl und das eingebettete Material (22) Aluminium oder Kupfer ist,

11. Verfahren nach Anspruch 9 oder 10, **dadurch gekennzeichnet, dass** mittels der Wärmetransporteinrichtung (22; 22'; 22") zu dem wenigstens einen anderen Bereich des Sonotrodenkörpers (10; 10'; 10") zuführte Wärme über eine äußere Oberfläche des Sonotrodenkörpers an die Umgebung abgeführt wird.

## Claims

1. Sonotrode (100; 100'; 100") comprising
- a sonotrode body (10; 10'; 10") that comprises at least one contact region (12; 12'; 12") for applying high-frequency mechanical oscillations, introduced at at least one introduction region (14; 14'; 14") of the sonotrode body (10; 10'; 10") by an oscillation unit, to at least one workpiece (200; 200'; 200") or material or a further tool acting thereon, and
- a heat dissipation device, by means of which heat can be dissipated from the contact region,
**characterised in that**
the heat dissipation device comprises a heat transfer device (22; 22'; 22") that is formed entirely inside the sonotrode body and functions according to the principle of a heat pipe or thermosiphon, and that is designed to dissipate heat from the contact region (12; 12'; 12") and supply said heat to at least one other region of the sonotrode body (10; 10'; 10"), and that comprises a cooling fluid (34', 36'; 34", 36") in at least one cavity (33'; 33") formed in the sonotrode body (10'; 10"), which cooling fluid is present in the liquid phase (34'; 34") at least in part, and is evaporable adjacently to the contact region (12'; 12") and condensable to the liquid phase at at least one point remote from the contact region, on a condensation surface (38'; 49") that comprises portions of the inner surface of the cavity (33'; 33"), in order to dissipate heat from said contact region.

2. Sonotrode (100') according to claim 1, **characterised in that** the liquid phase (34') can be conveyed towards the contact region (12') under the effect of gravity, in accordance with the principle of a thermosiphon.

3. Sonotrode (100") according to either claim 1 or claim 2, **characterised in that** the liquid phase (34") can be conveyed towards the contact region (12") by capillary action of at least one capillary structure (41") of the sonotrode body (10") and/or of a material received in the cavity (33"), in accordance with the principle of a heat pipe.

4. Sonotrode (100'; 100") according to any of claims 1 to 3, **characterised in that**, in order to form the cavity (33'; 33"), a recess in the sonotrode body is closed by a seal (50'; 50").

5. Sonotrode (100'; 100") according to claim 4, **characterised in that** the seal (50'; 50") is designed having a valve in order to evacuate the cavity or to remove gases in the cavity.

6. Sonotrode (100; 100'; 100") comprising
- a sonotrode body (10; 10'; 10") that comprises at least one contact region (12; 12'; 12") for applying high-frequency mechanical oscillations, introduced at at least one introduction region (14; 14'; 14") of the sonotrode body (10; 10'; 10") by an oscillation unit, to at least one workpiece (200; 200'; 200") or material or a further tool acting thereon, and
- a heat dissipation device, by means of which heat can be dissipated from the contact region,
**characterised in that**
- the heat dissipation device comprises a heat transfer device (22; 22'; 22") that is formed entirely inside the sonotrode body and is designed to dissipate heat from the contact region (12; 12'; 12") and supply said heat to at least one other region of the sonotrode body (10; 10'; 10"),
- the heat transfer device (22) comprising material (22) that is embedded in the sonotrode body (10) and that has a higher thermal conductivity than the material of the sonotrode body (10) surrounding the embedded material, and
- the surrounding material of the sonotrode body (10) being titanium, a titanium alloy or steel, and the embedded material (22) being aluminium or copper.

7. Sonotrode (100; 100'; 100") according to any of claims 1 to 5 or according to claim 6, **characterised in that** the sonotrode body (10; 10'; 10") comprises the introduction region (14; 14'; 14") at one end and the contact region (12; 12'; 12") at an opposing end.

8. Sonotrode (100; 100'; 100") according to claim 7, **characterised in that** the sonotrode body (10; 10'; 10") tapers, at least in regions, from a base portion (18; 18'; 18") of the sonotrode body (10; 10'; 10") that comprises the introduction region (14; 14'; 14") to the contact region (12; 12'; 12") that is provided, if desired, at a tip (19; 19'; 19") of the sonotrode body (10; 10'; 10").

9. Method for dissipating heat resulting from high-frequency mechanical oscillations being applied to at least one workpiece or material using a sonotrode tool and an oscillation unit, the sonotrode tool comprising a sonotrode body (10; 10'; 10") that comprises at least one introduction region (14; 14'; 14") at which high-frequency mechanical oscillations are introduced into the sonotrode body by the oscillation unit, and at least one contact region (12; 12'; 12") that is in contact with the workpiece (200; 200'; 200") or material such that the high-frequency mechanical oscillations are applied to the workpiece or material, the sonotrode tool further comprising a heat dissipation device by means of which heat is dissipated from the contact region, **characterised in that** the heat dissipation device comprises a heat transfer device (22; 22'; 22") that is formed entirely inside the sonotrode body and functions according to the principle of a heat pipe or thermosiphon, and that dissipates heat from the contact region and supplies said heat to at least one other region of the sonotrode body (10; 10'; 10"), and that comprises a cooling fluid (34', 36'; 34", 36") in at least one cavity (33'; 33") formed in the sonotrode body (10'; 10"), which cooling fluid is present in the liquid phase (34'; 34") at least in part, and is evaporated adjacently to the contact region (12'; 12") and condensed to the liquid phase at at least one point remote from the contact region, on a condensation surface (38'; 49") that comprises portions of the inner surface of the cavity (33'; 33"), in order to dissipate heat from said contact region.

10. Method for dissipating heat resulting from high-frequency mechanical oscillations being applied to at least one workpiece or material using a sonotrode tool and an oscillation unit, the sonotrode tool comprising a sonotrode body (10; 10'; 10") that comprises at least one introduction region (14; 14'; 14") at which high-frequency mechanical oscillations are introduced into the sonotrode body by the oscillation unit, and at least one contact region (12; 12'; 12") that is in contact with the workpiece (200; 200'; 200") or material such that the high-frequency mechanical oscillations are applied to the workpiece or material, the sonotrode tool further comprising a heat dissipation device by means of which heat is dissipated from the contact region, **characterised in that** the heat dissipation device comprises a heat transfer device (22; 22'; 22") that is formed in the sonotrode body, is formed entirely inside said body, and dissipates heat from the contact region and supplies said heat to at least one other region of the sonotrode body (10; 10'; 10"),
- the heat transfer device (22) comprising material (22) that is embedded in the sonotrode body (10) and that has a higher thermal conductivity than the material of the sonotrode body (10) surrounding the embedded material, and
- the surrounding material of the sonotrode body (10) being titanium, a titanium alloy or steel, and the embedded material (22) being aluminium or copper.

11. Method according to either claim 9 or claim 10, **characterised in that** heat supplied to the at least one other region of the sonotrode body (10; 10'; 10") is dissipated to the surroundings via an outer surface of the sonotrode body by means of the heat transfer device (22; 22'; 22").

## Revendications

1. Sonotrode (100 ; 100' ; 100") comprenant :
- un corps de sonotrode (10 ; 10'; 10") qui comprend au moins une zone de contact (12 ; 12' ; 12") pour la sollicitation d'au moins une pièce (200 ; 200' ; 200") ou un matériau ou un outil agissant sur celui-ci, avec des vibrations mécaniques générées par un générateur de vibrations au moins au niveau d'une zone d'application (14 ; 14' ; 14") du corps de sonotrode (10 ; 10' ; 10") et
- un dispositif d'évacuation de la chaleur au moyen duquel la chaleur peut être évacuée de la zone de contact,
**caractérisée en ce que**
le dispositif d'évacuation de la chaleur comprend un dispositif de transport de chaleur (22 ; 22' ; 22"), entièrement disposé à l'intérieur du corps de sonotrode, fonctionnant selon le principe d'un tube caloporteur ou d'un thermosiphon, qui est conçu pour évacuer la chaleur de la zone de contact (12 ; 12' ; 12") et de l'introduire dans au moins une autre zone du corps de sonotrode (10 ; 10'; 10"), et qui comprend, dans au moins une cavité (33' ; 33") réalisée dans le corps de sonotrode (10 ; 10' ; 10"), un fluide de refroidissement (34', 36' ; 34", 36"), qui existe au moins partiellement dans une phase liquide (34' ; 34") et qui, pour l'évacuation de la chaleur hors de la zone de contact (12' ; 12"), peut être évaporé à proximité de celle-ci et qui peut être condensé vers la phase liquide, au niveau d'au moins un endroit éloigné de la zone de contact, sur une surface de condensation (38' ; 49"), qui comprend les portions de la surface interne de la cavité (33' ; 33").

2. Sonotrode (100') selon la revendication 1, **caractérisée en ce que** la phase liquide (34') peut être convoyée, selon le principe d'un thermosiphon, par l'action de la gravité en direction de la zone de contact (12').

3. Sonotrode (100') selon la revendication 1 ou 2, **caractérisée en ce que** la phase liquide (34") peut être convoyée, selon le principe d'un tube caloporteur, par capillarité d'au moins une structure capillaire (41") du corps de sonotrode (10") et/ou d'un matériau logé dans la cavité (33"), en direction de la zone de contact (12").

4. Sonotrode selon l'une des revendications 1 à 3, **caractérisée en ce que**, pour la formation de la cavité (33' ; 33"), un évidement du corps de sonotrode est fermé par une fermeture (50' ; 50").

5. Sonotrode (100') selon la revendication 4, **caractérisée en ce que** la fermeture (50' ; 50") est conçue avec une soupape pour l'évacuation de la cavité ou l'élimination des gaz dans la cavité.

6. Sonotrode (100 ; 100' ; 100") comprenant
- un corps de sonotrode (10 ; 10'; 10") qui comprend au moins une zone de contact (12 ; 12' ; 12") pour la sollicitation d'au moins une pièce (200 ; 200' ; 200") ou un matériau ou un outil agissant sur celui-ci, avec des vibrations mécaniques générées par un générateur de vibrations au moins au niveau d'une zone d'application (14 ; 14' ; 14") du corps de sonotrode (10 ; 10' ; 10") et
- un dispositif d'évacuation de la chaleur au moyen duquel la chaleur peut être évacuée de la zone de contact,
**caractérisée en ce que**
- le dispositif d'évacuation de la chaleur comprend un dispositif de transport de chaleur (22, 22', 22") entièrement réalisé dans le corps de sonotrode, qui est conçu pour évacuer la chaleur de la zone de contact (12 ; 12' ; 12") et pour l'appliquer à au moins une autre zone du corps de sonotrode (10 ; 10' ; 10") et
- le dispositif de transport de chaleur (22) comprend un matériau (22) intégré dans le corps de sonotrode (10), qui présente une conductivité thermique supérieure à celle du matériau entourant le matériau intégré du corps de sonotrode (10) et
- le matériau d'enveloppe du corps de sonotrode (10 étant du titane, un alliage de titane ou de l'acier et le matériau intégré (22) étant de l'aluminium ou du cuivre.

7. Sonotrode (100 ; 100' ; 100") selon l'une des revendications 1 à 5 ou selon la revendication 6, **caractérisée en ce que** le corps de sonotrode (10 ; 10' ; 10") comprend au niveau d'une extrémité, la zone d'application (14 ; 14' ; 14") et à une extrémité opposée la zone de contact (12 ; 12' ; 12").

8. Sonotrode (100 ; 100' ; 10") selon la revendication 7, **caractérisée en ce que** le corps de sonotrode (10 ; 10' ; 10") se rétrécit au moins à certains endroits depuis une portion de base (18 ; 18' ; 18") du corps de sonotrode (10 ; 10' ; 10") comprenant la zone d'application (14 ; 14' ; 14") jusqu'à la zone de contact (12 ; 12' ; 12") prévue, le cas échéant, au niveau d'une pointe (19 ; 19' ; 19") du corps de sonotrode (10 ; 10' ; 10").

9. Procédé d'évacuation de chaleur, qui résulte de la sollicitation d'au moins une pièce ou matériau avec des vibrations mécaniques à haute fréquence à l'aide d'un outil de sonotrode et d'un générateur de vibrations, l'outil de sonotrode comprenant un corps de sonotrode (10 ; 10' ; 10"), qui comprend au moins une zone d'application (14 ; 14' ; 14") à laquelle des vibrations mécaniques à haute fréquence sont appliquées par le générateur de vibrations au corps de sonotrode et au moins une zone de contact (12 ; 12' ; 12") qui est en contact avec la pièce (200 ; 200' ; 200") ou le matériau, de façon à ce que la pièce ou le matériau est sollicité avec les vibrations mécaniques à haute fréquence, l'outil de sonotrode comprenant en outre un dispositif d'évacuation de chaleur, à l'aide duquel la chaleur est évacuée de la zone de contact, **caractérisé en ce que** le dispositif d'évacuation de chaleur comprend un dispositif de transport de chaleur (22 ; 22' ; 22") disposé entièrement à l'intérieur du corps de sonotrode, fonctionnant selon le principe d'un tube caloporteur ou d'un thermosiphon, qui évacue la chaleur de la zone de contact et l'applique à au moins une autre zone du corps de sonotrode (10 ; 10' ; 10") et qui comprend, dans au moins une cavité (33' ; 33") réalisée dans le corps de sonotrode (10' ; 10"), un fluide de refroidissement (34', 36' ; 34" ; 36"), qui existe au moins partiellement en phase liquide (34' ; 34") et qui, pour l'évacuation de la chaleur de la zone de contact (12' ; 12"), est évaporé à proximité de celle-ci et qui est condensé vers la phase liquide au niveau d'au moins un endroit éloigné de la zone de contact sur une surface de condensation (38' ; 49"), qui comprend des portions de la surface interne de la cavité (33' ; 33").

10. Procédé d'évacuation de chaleur, qui résulte de la sollicitation d'au moins une pièce ou d'un matériau avec des vibrations mécaniques haute fréquence à l'aide d'une outil de sonotrode et d'un générateur de vibrations, l'outil de sonotrode comprenant un corps de sonotrode (10 ; 10' ; 10") qui comprend au moins une zone d'application (14 ; 14' ; 14"), à laquelle sont appliquées des vibrations mécaniques à haute fréquence par le générateur de vibrations dans le corps de sonotrode et qui comprend au moins une zone de contact (12 ; 12' ; 12") qui est en contact avec la pièce (200 ; 200' ; 200") ou le matériau, de façon à ce que la pièce ou le matériau soit sollicité avec les vibrations mécaniques haute fréquence, l'outil de sonotrode comprenant en outre un dispositif d'évacuation de chaleur au moyen duquel la chaleur est évacuée de la zone de contact, **caractérisé en ce que** le dispositif d'évacuation de chaleur comprend un dispositif de transport de chaleur (22 ; 22' ; 22") réalisé dans le corps de sonotrode et entièrement disposé à l'intérieur de celui-ci, qui évacue la chaleur de la zone de contact et l'applique à au moins une autre zone du corps de sonotrode (10 ; 10' ; 10"),
- le dispositif de transport de chaleur (22) comprenant un matériau (22) intégré dans le corps de sonotrode (10), qui présente une conductivité thermique supérieure à celle du matériau du corps de sonotrode (10) entourant le matériau intégré et
- le matériau d'enveloppe du corps de sonotrode (10) étant du titane, un alliage de titane ou de l'acier et le matériau intégré (22) état de l'aluminium ou du cuivre.

11. Procédé selon la revendication 9 ou 10, **caractérisé en ce que** le dispositif de transport de chaleur (22 ; 22' ; 22") permet d'évacuer la chaleur appliquée à l'au moins une autre zone du corps de sonotrode (10 ; 10' ; 10") par l'intermédiaire d'une surface externe du corps de sonotrode vers l'environnement.
